# EUROPEAN PATENT SPECIFICATION

(11) **EP 0 712 138 B1**
(45) Date of publication and mention of the grant of the patent: **20.05.1998**
(21) Application number: 95306317.9
(22) Date of filing: 08.09.1995
(51) Int. Cl.: G21C 1/22, G21C 1/30

(54) **Arrangements for transferring energy in fission product isotope production reactors**
Vorrichtung zur Energieübertragung in einem zur Erzeugung von Isotopen als Spaltprodukt ausgelegten Reaktor
Dispositif de transfert d'énergie dans un réacteur de production d'isotopes comme produits de fission

(30) Priority: 10.11.1994 US 339250
(43) Date of publication of application: 15.05.1996
(73) Proprietor: THE BABCOCK & WILCOX COMPANY, New Orleans, Louisiana 70160-0035 (US)
(72) Inventor: Ball, Russell M., Lynchburg, Virginia 24503 (US); Bingham, Billy E., Lynchburg, Virginia 24502 (US)
(74) Representative: Pilch, Adam John Michael

(56) References cited:
- BE-A- 526 793
- CA-A- 2 098 560
- FR-A- 1 588 391
- FR-A- 2 214 509
- US-A- 3 284 305
- US-A- 4 158 700
- US-A- 4 487 738
- US-A- 4 563 327
- APPL. RADIAT. ISOT., vol.40, no.4, 1989, GREAT BRITAIN pages 315 - 324, XP000560947 W. L. CHENG 'Study on the Separation of Molybdenum-99 and Recycling of Uranium to Water Boiler Reactor'

## Description

The present invention relates to arrangements for transferring energy in fission product isotope production reactors, such as those which may be used to transfer energy in medical isotope production reactors.

Beginning in 1945, nuclear reactors have been used to produce medical isotopes employing various techniques. US Patent US-A-4 487 738 teaches a method for producing a copper (Cu) isotope for diagnostic and experimental medical applications. The Cu isotope is produced by proton spallation combined with subsequent chemical separation and purification.

US Patent US-A-3 914 373 discloses a method for separating isotopes by contacting a feed solution containing the isotopes with a cyclic polyether. This method has been applied to clinical, biological and medical research.

US Patent US-A-4 158 700 discloses a method of producing radioactive Technetium-99m using a solution containing Molybdenum-99 and Technetium-99m in conjunction with a chromatographic column and eluting it with a neutral solvent system comprising an organic solvent for producing Technetium 99m as a dry, particulate residue.

An article entitled "Study on the Separation of Molybdenum-99 and Recycling of Uranium to Water Boiler Reactor" by W. L. Cheng, et al., Appl. Radiot. Isot., Vol. 40, No. 4, pp. 315-324, 1989, teaches a process which includes the separation of Molybdenum-99 from uranium sulphate fuel solution with an α-benzoin oxime precipitation and purification by a chelating ion exchanger, and further purification through the use of alumina and calcium phosphate hydroxide as adsorbents.

Although the isotope Molybdenum-99 (Mo-99) is an isotope commonly used in the medical field, only one method exists for the production of medical isotopes such as Mo-99 that is approved by the United States Food and Drug Administration. This method comprises extracting the fission product, Mo-99, from a Uranium-235 target which has been irradiated in a neutron flux provided by a large nuclear reactor.

Because these nuclear reactors are used for other purposes besides producing the medical isotopes, the reactor power is high, usually 20,000 to 200,000 kilowatts. When producing medical isotopes, this power output results in heat and radioactive waste of at least 100 times the basic requirement by the nuclear reactor and is extremely wasteful

US Patent Application Serial No. 07/986,939 discloses a low cost method for a nuclear reactor which permits the use of all fission products produced by the reactor. The method is directed towards replacing nuclear reactors employing the reactor-target systems by using reactors operating at a power of about 100 to 300 kilowatts, typically about 200 kilowatts, for producing medical isotopes such as Mo-99.

According to the present invention there is provided an arrangement for transferring energy in a fission product isotope production reactor, the arrangement comprising a pool of liquid, a vessel disposed in the pool, a liquid core housed in the vessel, the vessel including a wall having an outer surface and an inner surface, the wall defining a reactive area, a fuel solution disposed in the reactive area, and heat transfer means in contact with the inner and outer surfaces of the wall for increasing heat transfer between the core fuel solution and the liquid in said pool.

A preferred embodiment of the present invention provides an arrangement for a medical isotope production reactor for producing isotopes such as Mo-99 operating at a power typically ranging from 100 to 300 kilowatts, wherein an optimum power is 200 kilowatts; this provides for an efficient transfer of energy from the core of the reactor through passive core cooling.

The arrangement embodying the present invention provides for the liquid core container or vessel of a medical isotope production reactor to be immersed in a large pool of water. The liquid core, which forms the reactor, comprises a fuel solution of fissionable material that, among other things, forms Molybdenum-99, as well as other fission products such as iodine or palladium. The arrangement takes advantage of the ability to remove the fission and fission-product generated thermal energy through heat transfer from the fuel solution in the core vessel to the pool of water through the vessel walls. The present invention provides various embodiments which are used to enhance the transfer of energy from the fuel solution of the core through the vessel walls to the pool, as the surface area is limited on the small core vessel.

A first embodiment of the invention provides for fins on the inside and outside walls of the core vessel, which permit an increase in energy removal per unit of core vessel surface due to the extra surface area and flow enhancement provided by the fins or corrugations on the core vessel walls. The fins can be rectangular-shaped, triangular-shaped or in the form of rods or bars. Baffles may also be added on the fins in order to enhance and control the flow of fluid.

A second embodiment of the invention provides for the use of tubes throughout the core to extend the core surface or provide channels that can be used to enhance the natural circulation flow.

A third embodiment enhances the heat transfer by adding an annular ring at the walls of the core vessel thereby increasing the heat transfer surface. Both the tube and annular ring embodiments may include fins or corrugations for extending the core vessel surface. These two embodiments allow the controls and safety rods to operate in the pool water and not in the fuel solution.

An alternative embodiment employs aerodynamic shapes such as airfoil-shaped fins for enhancing the flow of coolant over the inside and outside of the core vessel. By enhancing the flow rate, the temperature differences improve along with the heat transfer coefficient as the natural convection flows will have higher velocity in the vessel region. Baffles and flow channel extensions may also be used in conjunction with the airfoil-shaped fins.

The invention will now be described by way of example with reference to the accompanying drawings, throughout which like parts are referred to by like references, and in which:
Figure 1 is a schematic view illustrating a first embodiment of the present invention;
Figure 2 is a schematic view illustrating a second embodiment of the present invention;
Figure 3 is a schematic view of an alternative embodiment of Figure 1 having baffles extending from the fins;
Figure 4 is a schematic view of an alternative embodiment of Figure 2 having baffles extending from the tubes;
Figure 5 is a view illustrating a first shape of a fin which can be used with the first or second embodiments of the present invention;
Figure 6 is a view illustrating a second shape of a fin;
Figure 7 is a view illustrating a third shape of a fin;
Figure 8 is a schematic view of an alternative embodiment of Figure 2 having a different tube arrangement;
Figure 9 is a schematic view illustrating a third embodiment of the present invention;
Figure 10 is a schematic view of an alternative embodiment of Figure 8 having fins and baffles extending from the tubes;
Figure 11 is a schematic view of an alternative embodiment of Figure 9 having fins and baffles extending from the ring; and
Figure 12 is a schematic view illustrating a fourth embodiment of the present invention.

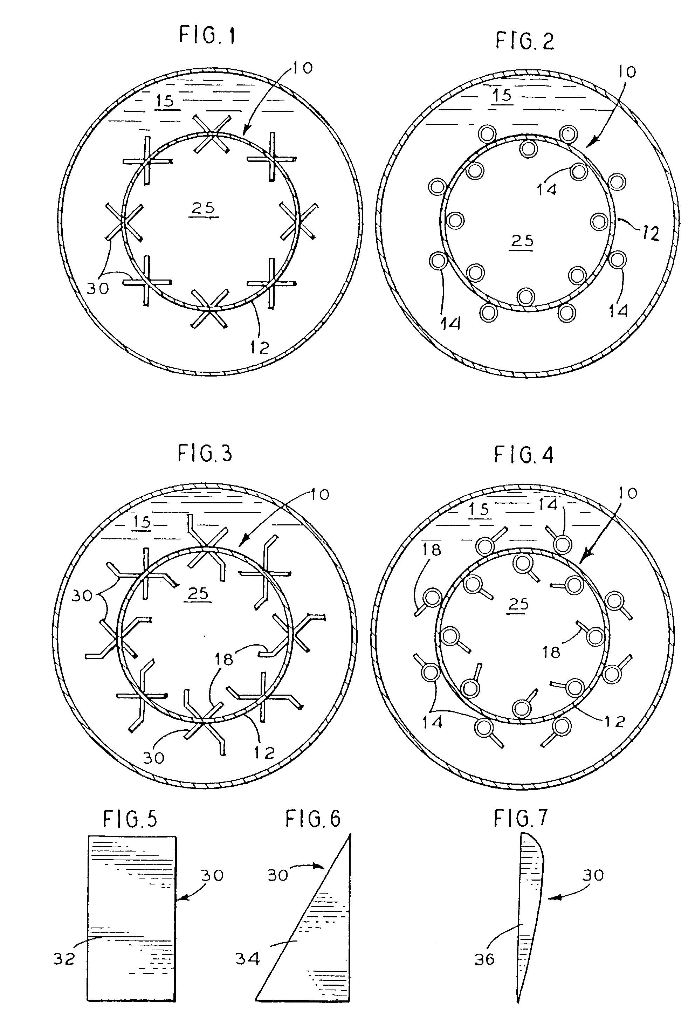

A first embodiment of the medical isotope production reactor, according to the present invention, is illustrated at Figure 1, and comprises a core vessel 10 having a vessel wall 12 defining a chain reacting volume containing a fuel solution 25. The core vessel 10 is located within a pool 15 of a liquid such as water for facilitating heat transfer from the fuel solution 25 in the core vessel 10 to the liquid pool 15. Fins 30 are provided on both the inner and outer surfaces of the vessel wall 12 for assisting in the heat transfer.

A second embodiment, according to the present invention, is illustrated at Figure 2, and includes a plurality of tubes 14, which can also be rods or bars, at both the outer and the inner surfaces of the vessel wall 12 for ensuring an efficient heat transfer from the fuel solution 25 in the core vessel to to the liquid pool 15. The tubes 14 are in contact with the wall 12 for improved heat transfer. The outer tubes may extend above the core vessel to enhance the internal flow, thereby improving heat transfer.

At Figure 3 there is illustrated an alternative embodiment of Figure 1 which includes baffles 18 extending from the fins 30 into the liquid pool 15 and the fuel solution 25 for improved heat transfer. Again, the outer baffle may be extended above the core vessel to improve the pool coolant flow for added cooling.

At Figure 4 there is illustrated an alternative embodiment of Figure 2 which includes baffles 18 extending from or into the tubes 14 into the liquid pool 15 and the fuel solution 25 for added surface to improve heat transfer.

The fins 30 can be rectangular-shaped as shown at 32 in Figure 5, triangular-shaped as shown at 34 in Figure 6 or airfoil-shaped as shown at 36 in Figure 7.

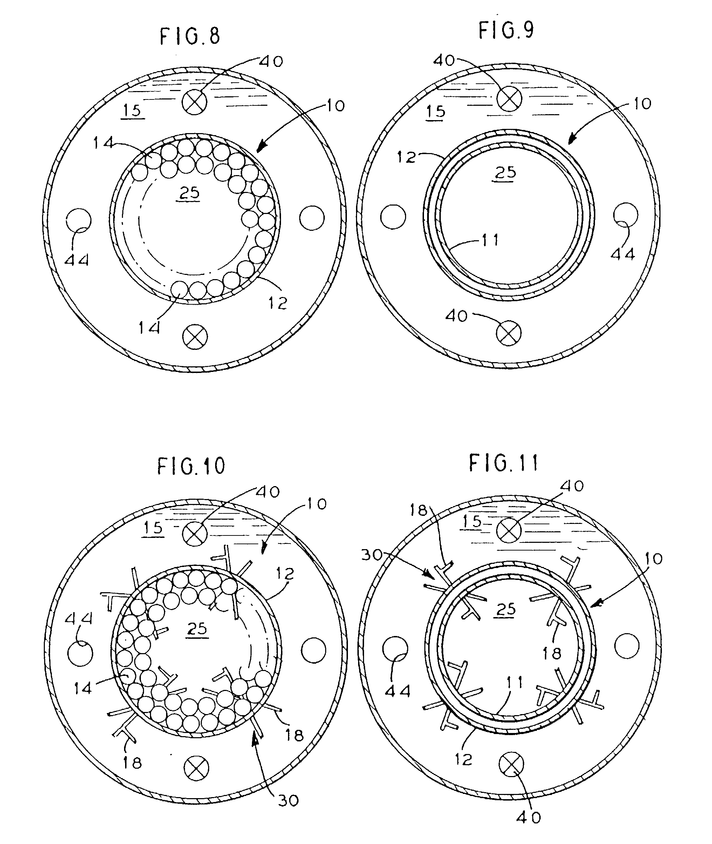

At Figure 8 there is illustrated an alternative embodiment of Figure 2 comprising a plurality of tubes 14 located within the core vessel 10 in the fuel solution 25 thereby allowing pool liquid to pass through sealed channels through the core region and thus improving flow and providing increased surface.

A third embodiment, according to the present invention, is illustrated at Figure 9, and includes an annular ring 11 which increases the natural circulation flow at the core vessel thereby enhancing the heat transfer at the vessel wall 12.

At Figure 10 there is illustrated an alternative embodiment of Figure 8 including fins 30 and baffles 18 extending from the tubes 14 into the liquid pool 15 and the fuel solution 25.

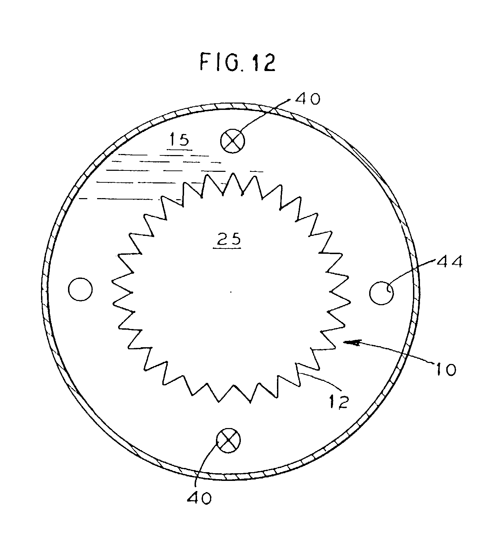

At Figure 11 there is illustrated an alternative embodiment of Figure 9 including fins 30 and baffles 18 extending from the tubes 14 into the liquid pool 15 and the fuel solution 25.

The embodiments shown at Figures 8, 9, 10 and 11 include the safety rods 40 and control means 44, all of which are located in the liquid pool 15 near the vessel wall and not in the fuel solution 25.

A fourth embodiment, according to the present invention, is illustrated at Figure 12, and comprises having the inner and outer surfaces of the vessel wall 12 corrugated to enhance the heat transfer at the wall 12.

While specific embodiments of the invention have been shown and described in detail to illustrate the application of the principles of the invention, it will be understood that the invention may be embodied otherwise without departing from such principles.

## Claims

1. An arrangement for transferring energy in a fission product isotope production reactor, the arrangement comprising a pool (15) of liquid, a vessel (10) disposed in the pool (15), a liquid core housed in the vessel (10), the vessel (10) including a wall (12) having an outer surface and an inner surface, the wall (12) defining a reactive area, a fuel solution (25) disposed in the reactive area, and heat transfer means (30;14;11) in contact with the inner and outer surfaces of the wall (12) for increasing heat transfer between the core fuel solution (25) and the liquid in said pool (15).

2. An arrangement according to claim 1, wherein the heat transfer means includes at least one fin (30) on the inner surface and the outer surface of the wall (12) of said vessel (10).

3. An arrangement according to claim 1, wherein the heat transfer means includes at least one tube (14) respectively disposed on the inner surface and the outer surface of the wall (12) of said vessel (10).

4. An arrangement according to claim 3, including at least one fin (30) attached to the tubes (14) disposed on the inner and outer surfaces of the wall (12) of said vessel (10).

5. An arrangement according to claim 2 or claim 4, wherein the fins on the inner and outer surfaces include at least one baffle (18).

6. An arrangement according to claim 1, wherein the heat transfer means includes an annular ring (11) attached to the inner surface of the wall (12) of said vessel (10).

7. An arrangement according to claim 6, including at least one fin (30) attached to the annular ring (11) and at least one fin (30) attached to the outer surface of the wall (12) of said vessel (10).

8. An arrangement according to claim 1, wherein the heat transfer means includes a plurality of tubes (14) disposed in the reactive area of said core.

9. An arrangement according to claim 8, including at least one fin (30) attached to the tubes (14).

10. An arrangement according to claim 2, claim 4, claim 5, claim 7 or claim 9, including a baffle (18) attached to each fin (30).

11. An arrangement according to claim 2, claim 4, claim 5, claim 7, claim 9 or claim 10, wherein the fin (30) is rectangular-shaped (32).

12. An arrangement according to claim 2, claim 4, claim 5, claim 7, claim 9 or claim 10, wherein the fin (30) is triangular-shaped (34).

13. An arrangement according to claim 2, claim 4, claim 5, claim 7, claim 9 or claim 10, wherein the fin (30) is airfoil-shaped (36).

14. An arrangement according to claim 1, wherein the inner and outer surfaces of the wall (12) are corrugated to enhance heat transfer.

15. An arrangement according to any one of the preceding claims, wherein control means (44) are disposed in the pool (15) for regulating the flow of said fuel solution (25).

16. An arrangement according to any one of the preceding claims, wherein detector means are disposed in the pool (15) for monitoring said fuel solution (25).

17. An arrangement according to any one of the preceding claims, wherein the liquid comprises water.

## Patentansprüche

1. Anordnung zur Überführung von Energie in einem Reaktor zur Erzeugung eines Spaltungsproduktisotops, wobei die Anordnung ein Flüssigkeitsbecken (15), einen in dem Becken (15) angeordneten Behälter (10), einen in dem Behälter (10) untergebrachten Flüssigkeitskern, wobei der Behälter (10) eine Wand (12) mit einer Außenoberfläche und einer Innenoberfläche einschließt und die Wand (12) einen reaktiven Bereich begrenzt, eine in dem reaktiven Bereich angeordnete Brennstofflösung (25) sowie Wärmeüberführungseinrichtungen (30, 14, 11) in Kontakt mit den Innen- und Außenoberflächen der Wand (12) zur Steigerung der Wärmeüberführung zwischen Kernbrennstofflösung (25) und der Flüssigkeit in dem Becken (15) umfaßt.

2. Anordnung nach Anspruch 1, bei der die Wärmeüberführungseinrichtung wenigstens einen Flügel (30) auf der Innenoberfläche und der Außenoberfläche der Wand (12) des Behälters (10) einschließt.

3. Anordnung nach Anspruch 1, bei der die Wärmeüberführungseinrichtung wenigstens ein Rohr (14) einschließt, das auf der Innenoberfläche bzw. der Außenoberfläche der Wand (12) des Behälters (10) angeordnet ist.

4. Anordnung nach Anspruch 3, die wenigstens einen Flügel (30) einschließt, welcher an den Rohren (14) befestigt ist, welche auf den Innen- und Außenoberflächen der Wand (12) des Behälters (10) angeordnet sind.

5. Anordnung nach Anspruch 2 oder 4, bei der die Flügel auf den Innen- und Außenoberflächen wenigstens eine Prallplatte (18) einschließen.

6. Anordnung nach Anspruch 1, bei der die Wärmeüberführungseinrichtung einen Ring (11) einschließt, der an der Innenoberfläche der Wand (12) des Behälters (10) befestigt ist.

7. Anordnung nach Anspruch 6, die wenigstens einen an dem Ring (11) befestigten Flügel und wenigstens einen an der Außenoberfläche der Wand (12) des Behälters (10) befestigten Flügel (30) einschließt.

8. Anordnung nach Anspruch 1, bei der die Wärmeüberführungseinrichtung mehrere Rohre (14) einschließt, die in dem reaktiven Bereich des Kernes angeordnet sind.

9. Anordnung nach Anspruch 8, die wenigstens einen Flügel (30) einschließt, der an den Rohren (14) befestigt ist.

10. Anordnung nach Anspruch 2, 4, 5, 7 oder 9, die eine an jedem Flügel (30) befestigte Prallplatte (18) einschließt.

11. Anordnung nach Anspruch 2, 4, 5, 7, 9 oder 10, bei der der Flügel (30) rechteckig geformt (32) ist.

12. Anordnung nach Anspruch 2, 4, 5 ,7, 9 oder 10, bei der der Flügel (30) dreieckig geformt (34) ist.

13. Anordnung nach Anspruch 2, 4, 5, 7, 9 oder 10, bei der der Flügel (30) tragflächenförmig (36) ist.

14. Anordnung nach Anspruch 1, bei der die Innen- und Außenoberflächen der Wand (12) gewellt sind, um die Wärmeüberführung zu verbessern.

15. Anordnung nach einem der vorausgehenden Ansprüche, bei der Steuereinrichtungen (44) in dem Becken (15) zur Regulierung des Flusses der Brennstofflösung (25) angeordnet sind.

16. Anordnung nach einem der vorausgehenden Ansprüche, bei der Detektoreinrichtungen in dem Becken (15) zur Überwachung der Brennstofflösung (25) angeordnet sind.

17. Anordnung nach einem der vorausgehenden Ansprüche, bei der die Flüssigkeit Wasser umfaßt.

## Revendications

1. Système de transfert d'énergie dans un réacteur de production d'isotopes de produit de fission, le système comprenant une piscine (15) de liquide, une cuve (10) disposée dans la piscine (15), un coeur liquide logé dans la cuve (10), la cuve (10) comprenant une paroi (12) ayant une surface extérieure et une surface intérieure, la paroi (12) définissant une zone réactive, une solution combustible (25) disposée dans la zone réactive, et des moyens de transfert de chaleur (30 ; 14 ; 11) en contact avec les surfaces intérieure et extérieure de la paroi (12) pour augmenter le transfert de chaleur entre la solution combustible du coeur (25) et le liquide dans ladite piscine (15).

2. Système selon la revendication 1, dans lequel les moyens de transfert de chaleur comprennent au moins une ailette (30) sur la surface intérieure et sur la surface extérieure de la paroi (12) de ladite cuve (10).

3. Système selon la revendication 1, dans lequel les moyens de transfert de chaleur comprennent au moins un tube (14) disposé respectivement sur la surface intérieure et la surface extérieure de la paroi (12) de ladite cuve (10).

4. Système selon la revendication 3, comprenant au moins une ailette (30) fixée aux tubes (14) disposés sur les surfaces intérieure et extérieure de la paroi (12) de ladite cuve (10).

5. Système selon la revendication 2 ou la revendication 4, dans lequel les ailettes sur les surfaces intérieure et extérieure comprennent au moins une chicane (18).

6. Système selon la revendication 1, dans lequel les moyens de transfert de chaleur comprennent une bague annulaire (11) fixée à la surface intérieure de la paroi (12) de ladite cuve (10).

7. Système selon la revendication 6, comprenant au moins une ailette (30) fixée à la bague annulaire (11) et au moins une ailette (30) fixée à la surface extérieure de la paroi (12) de ladite cuve (10).

8. Système selon la revendication 1, dans lequel les moyens de transfert de chaleur comprennent une pluralité de tubes (14) disposés dans la zone réactive dudit coeur.

9. Système selon la revendication 8, comprenant au moins une ailette (30) fixée aux tubes (14).

10. Système selon la revendication 2, la revendication 4, la revendication 5, la revendication 7 ou la revendication 9, comprenant une chicane (18) fixée à chaque ailette (30).

11. Système selon la revendication 2, la revendication 4, la revendication 5, la revendication 7, la revendication 9 ou la revendication 10, dans lequel l'ailette (30) a une forme rectangulaire (32).

12. Système selon la revendication 2, la revendication 4, la revendication 5, la revendication 7, la revendication 9 ou la revendication 10, dans lequel l'ailette (30) a une forme triangulaire (34).

13. Système selon la revendication 2, la revendication 4, la revendication 5, la revendication 7, la revendication 9 ou la revendication 10, dans lequel l'ailette (30) a une forme de profil d'aile (36).

14. Système selon la revendication 1, dans lequel les surfaces intérieure et extérieure de la paroi (12) sont cannelées pour améliorer le transfert de chaleur.

15. Système selon l'une quelconque des revendications précédentes, dans lequel des moyens de commande (44) sont disposés dans la piscine (15) pour réguler l'écoulement de ladite solution combustible (25).

16. Système selon l'une quelconque des revendications précédentes, dans lequel des moyens de détection sont disposés dans la piscine (15) pour contrôler ladite solution combustible (25).

17. Système selon l'une quelconque des revendications précédentes, dans lequel le liquide est composé d'eau.
